# EUROPEAN PATENT APPLICATION

(11) **EP 2 030 726 A1**
(43) Date of publication of application: **04.03.2009**
(21) Application number: 08105137.7
(22) Date of filing: 26.08.2008
(51) Int. Cl.: B24B 3/06, B24B 19/04, B24B 41/06

(54) **Medical cutting tool manufacturing apparatus and method**

(30) Priority: 30.08.2007 JP 2007224116
(71) Applicant: MANI Inc., Utsunomiya-shi, Tochigi 321-3231 (JP)
(72) Inventor: Shiori, Mutsunori, Utsunomiya-shi Tochigi 321-3231 (JP); Tetsuka, Satoshi, Utsunomiya-shi Tochigi 321-3231 (JP); Katoh, Kazuaki, Utsunomiya-shi Tochigi 321-3231 (JP)
(74) Representative: Skuhra, Udo

(57) **Abstract**

A medical cutting tool manufacturing apparatus, which can form cutting blades to the top face with a simple structure, and a manufacturing method for the same are provided. The medical cutting tool manufacturing apparatus of the present invention, which manufactures a medical cutting tool such as a steel bar having a plurality of cutting blades 22a at the tip of a working section 22, includes a main shaft 110, which includes a chuck 112 that holds the steel bar 20 in a freely detachable manner; a main shaft support 120, which holds the main shaft 110 allowing change in a slant angle of the main shaft; an XY table 130, which freely moves the main shaft support 120 in X and Y axis directions; and a rotatable disc whetstone 141, which forms the cutting blades in the working section of the medical cutting tool held by the chuck. The whetstone 141 has a structure within the horizontal plane (XY plane).

## Description

### BACKGROUND OF THE INVENTION

### FIELD OF THE INVENTION

The present invention relates to manufacturing technology of a dental cutting tool having slanted cutting blades in a working section of the tip of a carbide bar, steel bar, peeso reamer, or gates drill, or medical cutting blade such as a surgical bar. In particular, it relates to medical cutting tool manufacturing apparatus and method suitable for forming cutting blades in the tip working section.

### DESCRIPTION OF THE RELATED ART

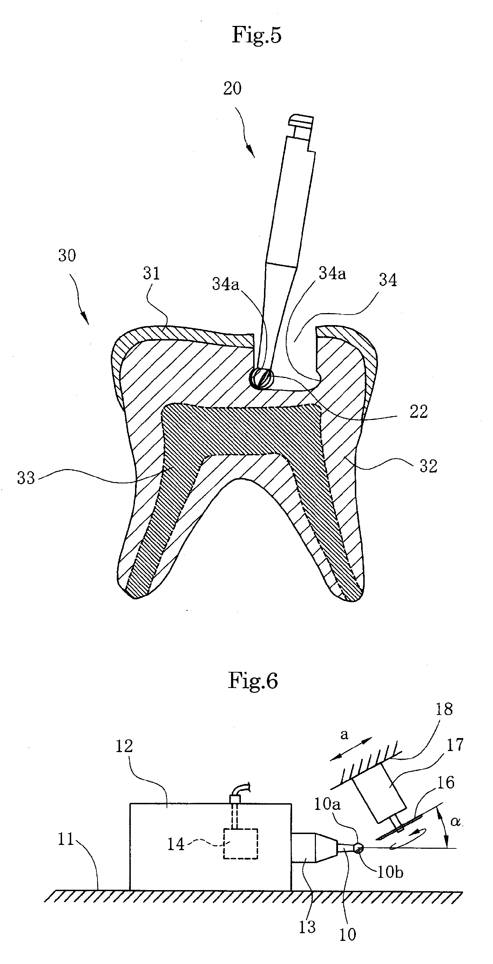

FIG. 6 is a diagram explaining conventional manufacturing apparatus and method for a medical cutting tool having slanted cutting blades in the working section of the tip of a steel bar or the like.

A steel bar 10 to be machined is held by a chuck 13, which is at the tip of a main shaft 12 fixed on a machining bed 11. A chuck operating portion 14 that attaches and detaches the steel bar 10 to and from the chuck 13 is provided within the main shaft 12. The steel bar 10 is fixed to the main shaft 12 with the axis of the steel bar extending horizontally.

A disc grindstone 16 is fixed to the revolving shaft of a motor 17, and the motor 17 is supported by a frame 18 of the device so that the grindstone 16 makes an angle α with the horizontal plane. The angle α of the grindstone 16 is adjustable. The motor 17 slides on the top surface of the frame 18 in the a direction, thereby forming a cutting blade 10b slanted only a predetermined lead angle with a spherical working section 10a of the tip of the steel bar 10. When the steel bar 10 has multiple cutting blades 10b, each time a cutting blade 10b is formed, the steel bar 10 rotates only an angle equivalent to one blade, and then forms the next cutting blade 10b with the disc grindstone 16. Repetition of this step for the same number as that of blades completes formation of the cutting blades 10b.

### SUMMARY OF THE INVENTION

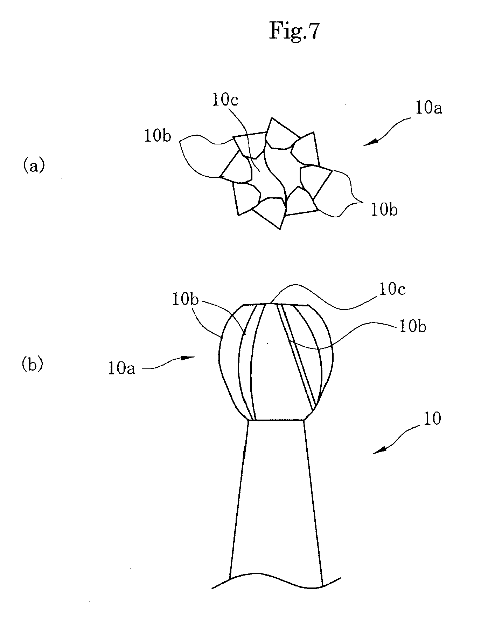

FIG. 7 is an enlarged view of the tip area of the steel bar manufactured by the apparatus of FIG. 6, where (a) is a top view and (b) is a front view. As shown in these drawings, the cutting blades 10b with a lead angle are formed on the working area 10a of the tip of the steel bar 10.

However, with the conventional manufacturing method shown in FIG. 6, since the disc grindstone 16 only moves linearly in the directions of an arrow *a*, a portion 10c hardly having any cutting blade 10b is generated on the top face of the working area 10a. Moreover, while the working area 10a was nearly a sphere before forming the cutting blades 10b, it has become quite a deformed shape from the sphere through the process of forming the cutting blades 10b. This is because movement of the grindstone 16 is linear. If the grindstone 16 moves in an arc form, a cutting blade 10b may be formed also on the top face 10c.

However, in order to move the rotating grindstone 16, clearance of the sliding region of the grindstone 16 is necessary, whereby the grindstone 16 bumps and precision of the cutting blades 10b decreases. While this clearance may be reduced by increasing the manufacturing precision of the sliding region, even the slightest clearance in the movement of the grindstone 16 leads to bumpiness and adversely affects the shape or the like of the cutting blade 10b to be cut. More specifically, since the cutting blade 10b is small with a diameter of 0.5 to 2.35 mm, this slight clearance is regarded as causing great deformation from the sphere shown in FIG. 7.

Moreover, if the linear movement is changed to a non-linear movement, further increase in the clearance of the sliding region is possible, resulting in difficulty in precise formation of the cutting blade 10b.

The present invention is devised through consideration of these problems. An objective thereof is to provide manufacturing apparatus and method for a medical cutting tool that allows formation of a precise cutting blade until the top face.

A medical cutting tool manufacturing apparatus of the present invention for reaching the above-given purpose manufactures a medical cutting tool having a plurality of cutting blades at the tip of a working section. The manufacturing apparatus includes a main shaft, which includes a chuck that holds the medical cutting tool in a freely detachable manner; a main shaft support, which holds the main shaft allowing change in a slant angle of the main shaft; an XY table, which freely moves the main shaft support in X and Y axis directions; and a rotatable disc whetstone, which forms the cutting blades in the working section of the medical cutting tool held by the chuck. The disc whetstone is in a horizontal plane parallel to an XY plane demarcated with the X axis and Y axis, and the slant angle is an angle of the XY plane and the medical cutting tool intersecting.

The XY plane may be the horizontal plane, and the main shaft may rotate the medical cutting tool only a predetermined angle.

Moreover, a medical cutting tool manufacturing method of the present invention for reaching the above-given purpose includes the steps of: holding a medical cutting tool, which has a working section at the tip of a rod-like shaft, such that the shaft slants only a predetermined angle with a given plane; rotating the disc whetstone, which is parallel to the given plane, at a fixed position; and moving the medical cutting tool in the X and Y directions and forming cutting blades in the working section using the whetstone. The given plane is a plane parallel to an XY plane demarcated with the X axis and Y axis.

The XY plane may be the horizontal plane, the working section may be almost a sphere, and cutting blades may be formed by moving the medical cutting tool in an arc form in the XY plane.

According to the present invention, in the case of manufacturing a medical cutting tool having slanted cutting blades, since the medical cutting tool is slanted and a whetstone is kept within a designated plane, moving of the whetstone is unnecessary, and moving of the medical cutting tool allows formation of the cutting blades in the tip of the working section. Namely, there is an excellent result of preventing the working section from changing in shape due to a bumpy whetstone without needing to move the rotating whetstone. Moreover, the structure of the medical cutting tool manufacturing apparatus may be simplified in comparison to structure in which the rotating whetstone is moved two-dimensionally along orthogonal X and Y axes, and costs may thus be lowered.

### BRIEF DESCRIPTION OF DRAWINGS

FIG. 1 schematically shows a principal composition of a medical cutting tool manufacturing apparatus of the present invention, where (a) is a front view and (b) is a top view;
FIG. 2 is a diagram of a steel bar of the present invention, where (a) is a front view and (b) is a cross section cut along the line A-A of (a);
FIG. 3 is a diagram explaining a work cutting method of the present invention, where (a) is an enlarged view of the tip of the steel bar of FIG. 1 and (b) is a diagram viewed from the top explaining how the steel bar moves;
FIG. 4 is an enlarged view of the tip area of the steel bar formed by the cutting method of the present invention, where (a) is a top view and (b) is a front view;
FIG. 5 is a diagram showing a state of cutting a cavity with the steel bar of the present invention;
FIG. 6 is a diagram explaining conventional manufacturing apparatus and method for a medical cutting tool having a slanted cutting blade of the working section of the tip of a steel bar or the like; and
FIG. 7 is an enlarged view of the tip area of the steel bar manufactured by the apparatus of FIG. 6, where (a) is a top view and (b) is a front view.

### DETAILED DESCRIPTION OF THE PREFERRED EMBODIMENT

An embodiment according to the present invention is described forthwith with reference to attached drawings.

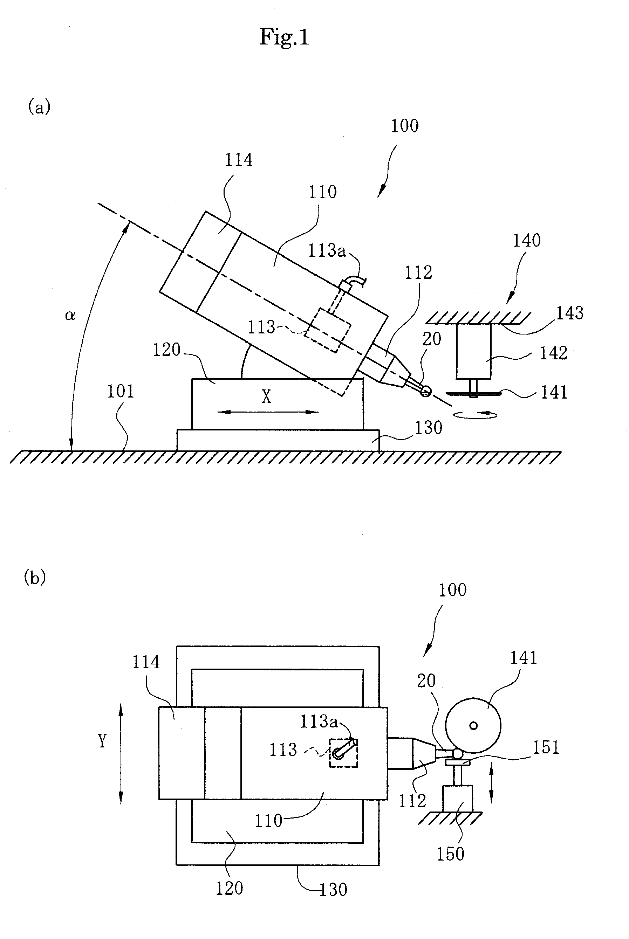

FIG. 1 schematically shows a principal composition of a medical cutting tool manufacturing apparatus of the present invention, where (a) is a front view and (b) is a top view. A steel bar is exemplified as the medical cutting tool forthwith. As shown in this drawing, a medical cutting tool manufacturing apparatus 100 of the present invention is constituted by a main shaft 110, a main shaft support 120, which supports the main shaft 110, an XY table 130, which moves the main shaft support 120 in the X and Y directions, and a grindstone 140.

The main shaft 110 has a chuck 112, and a clamp device 113 formed in the main shaft 110 is driven by highpressure fluid supplied from a pipe 113a, thereby allowing detachment of a steel bar 20 to be machined.

The main shaft support 120 supports the main shaft 110 by a mechanism that can slant the main shaft 110 at an arbitrary angle with the horizontal plane. Various mechanisms such as a gear mechanism, a mechanism using a fluid cylinder, a screw shaft, and the like may be employed as such mechanism.

A drive member 114 is attached to the back end of the main shaft 110, and using a motor embedded therein and a mechanism coupling the main shaft 110 and the main shaft support 120, angle α made by the main shaft 110 and a bed 101 may be changed to a desired value. An angle indicator not shown in the drawing is provided to the main shaft support 120 and is devised to read the value of the angle α. A fluid cylinder may be used as the drive member 114.

The XY table 130 is fixed and installed on the bed 101 and moves the main shaft support 120 in the X and Y directions within the horizontal plane along a preset curve by a control device using a computer or the like not shown in the drawing. The structure of the XY table 130 and control by computer are made according to a well-known method such as using a screw shaft or the like. The moving distance with the present invention is equal to the length of the working section 22 of the steel bar 20 approximately, where it may be a sphere or short cylinder with a relatively short distance.

The grindstone 140 includes a disc whetstone 141 and a motor 142 rotating the whetstone 141, where the motor 142 is fixed to a frame 143. The frame 143 is fixed to the bed 101. The disc of the whetstone 141 is in the horizontal plane, which is parallel to the aforementioned XY plane.

A press member 150 is provided at a position facing the whetstone 141, where the front edge of a press plate 151 lightly touches the processing area of the steel bar 20 to keep the steel bar 20 from bending or slipping using strength of the grindstone.

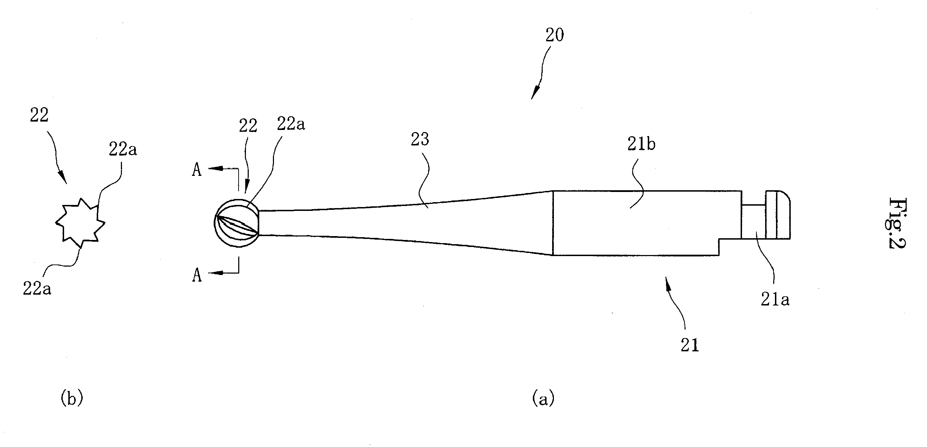

FIG. 2 is a diagram of the steel bar of the present invention, where (a) is a front view and (b) is a cross section cut along the line A-A of (a). The steel bar 20 of FIG. 2 includes a rear anchor side handle 21, a front edge working section 22, multiple cutting blades 22a formed in the working section 22, and a tapered intermediate section 23 between the working section 22 and the handle 21. Material of the steel bar 20 may be ordinary tool steel, or stainless steel may also be used. In the case of austenitic stainless steel, since it does not harden through heat treatment, use a fiber structure formed through wire drawing. Wire drawing hardens sufficiently, thereby providing enough hardness to cut tooth dentine.

The handle 21 includes an attachment 21a connected to a hand piece, and a straight part 21b for a rotating apparatus to grip. The attachment 21a has an irregular shape in order to provide a locking feature. The working section 22 is a sphere and has multiple arc-shaped cutting blades 22a formed circumferentially. The cutting blades 22a are formed almost spirally in the working section 22.

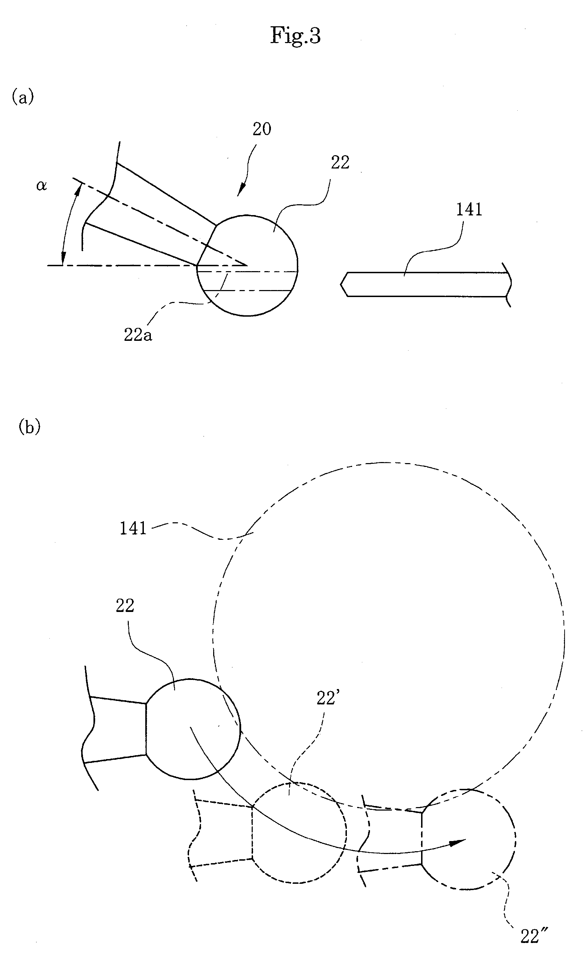

FIG. 3 is a diagram explaining a work cutting method of the present invention, where (a) is an enlarged view of the tip of the steel bar 20 of FIG. 1 and (b) is a diagram viewed from the top explaining how the steel bar 20 moves.

As shown in FIG. 3(a), the steel bar 20 is held by the main shaft 110 such that the axis of the steel bar makes an angle α with the XY plane or horizontal plane. This angle α is the same as the lead angle of the cutting blades 22a of the steel bar 20 and is determined in the design stage, and the angle of the main shaft 110 and the main shaft support 120 may be changed according to rotation of the motor of the drive member 114. An operator may check the angle with an angle indicator provided on the main shaft support 120. Meanwhile, the disc whetstone 141 is held horizontally and can be rotated by the motor 142, where the motor 142 is fixed in a fixed position.

When the XY table 130 moves the steel bar 20 in the X direction indicated in FIG. 1, the whetstone 141 grinds the working section 22, thereby forming the cutting blades 22a. At this time, as shown in FIG. 3(b), the control device not shown in the drawing controls so as to move the steel bar 20 not only in the X direction but also in the Y direction, and move the working section 22 in an arc form from 22' to 22". This kind of movement is possible through application of the well-known NC machine tool control device.

The steel bar 20 moving approximately 1/4 of the lap along the arc concentric with the central axis of the whetstone 141 may form the cutting blades 22a from the tip of the working section 22 to the connection with the intermediate section 23. The whetstone 141 is rotated at the fixed position by the motor 142 during this time.

It is crucial at this time that the XY table supporting the steel bar 20 is what moves, whereas the whetstone 141 does not move. Whether the whetstone 141 or the XY table 130, clearance with the sliding region is necessary for moving it, as mentioned before. On the other hand, since the steel bar 20 is stationary without rotating, it is drawn to one side of the clearance due to its own weight or the load at the time of grinding by the whetstone 141, making it not be bumpy. Meanwhile, when there is clearance with the support of the rotating whetstone 141, vibration occurs due to the rotation of the whetstone 141. This vibration causes the polishing surface of the whetstone 141 to vibrate, preventing precise grinding.

Once one cutting blade 22a is grinded, the steel bar 20 is then rotated only for one blade and then forms the next cutting blade. This is repeated for the number of blades to form all of the cutting blades 22a of the steel bar 20. According to the manufacturing apparatus 100 of the present invention, rotation of the chuck 112 for one blade may be performed automatically under the control of the control device.

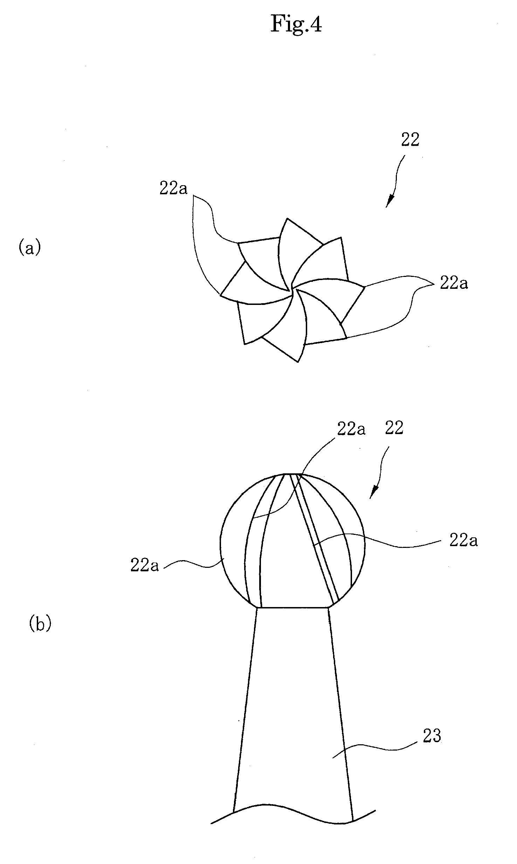

FIG. 4 is an enlarged view of the tip area of the steel bar 20 formed by the cutting method of the present invention, where (a) is a top view and (b) is a front view. As shown in this drawing, eight cutting blades 22a are formed in the working section 22, where each of the cutting blades 22a reach the tip of the working section 22. Moreover, the working section 22 maintains the spherical shape from before formation of the cutting blades 22a.

The present invention allows formation of the cutting blades 22a in the working section 22 by slanting the steel bar 20 using the main shaft 110 and then moving the main shaft 110. Meanwhile, the grindstone 140 does not need to be moved but only rotate the whetstone 141 from its fixed position. The structure of slanting the grindstone 140 including the motor 142 and moving it along both the X and Y axes is complicated so as to secure high accuracy for minimizing clearance. However, the structure of moving the main shaft 110 not required to be rotated in the X and Y directions may be relatively simple. Therefore, this allows simplification of the structure of the medical cutting tool manufacturing apparatus and inexpensive manufacturing thereof.

FIG. 5 is a diagram showing that a cavity 30 is being cut with the steel bar 20 of the present invention shown in FIG. 2. The surface of a portion protruding from the gum of the cavity 30 is covered by enamel 31 and dentine 32 is therebelow. There is dental pulp 33 inside of the dentine 32. Dental caries is removed in treatment of a cavity, however, in this example, the dental caries has reached to the middle of the dentine 32 from the enamel 31 portion but not to the dental pulp 33. Therefore, the dental caries of the dentine 32 is removed, forming a hole 34. At this time, since the working section 22 of the steel bar 20 is nearly a sphere, it is easy to form a concave portion 34a at the bottom of the hole 34. By forming such concave portion 34a, filling does not come off easily due to an anchor effect.

With the conventional steel bar 10, formation of this concave portion 34a was difficult since the working section 10a was not a complete sphere. On the other hand, the steel bar 20 of the present invention allows a result of easily forming the hole opening 34a.

In the above-given embodiment, a spherical working section 22 has been described; however, the present invention is not limited thereto, and is applicable to a cylindrical shape or the like.

Moreover, the XY plane was described as the horizontal plane; however, it is self evident that the XY plane may be a vertical plane perpendicular to the horizontal plane, or may have an arbitrary angle therewith.

## Claims

1. A medical cutting tool manufacturing apparatus, which manufactures a medical cutting tool having a plurality of cutting blades at the tip of a working section, comprising:
a main shaft, which includes a chuck that holds the medical cutting tool in a freely detachable manner;
a main shaft support, which holds the main shaft allowing change in a slant angle of the main shaft;
an XY table, which freely moves the main shaft support in X and Y axis directions; and
a rotatable disc whetstone, which forms the cutting blades in the working section of the medical cutting tool held by the chuck, wherein
the disc whetstone is in a horizontal plane parallel to an XY plane demarcated with the X axis and Y axis, and the slant angle is an angle of the XY plane and the medical cutting tool intersecting.

2. The medical cutting tool manufacturing apparatus of Claim 1, wherein the XY plane is a horizontal plane.

3. The medical cutting tool manufacturing apparatus of Claim 1, wherein the main shaft rotates the medical cutting tool a predetermined angle.

4. A medical cutting tool manufacturing method, comprising the steps of:
holding a medical cutting tool, which has a working section at the tip of a rod-like shaft, such that the shaft slants a predetermined angle with a given plane;
rotating the disc whetstone, which is parallel to the given plane, at a fixed position; and
moving the medical cutting tool in the X and Y directions and forming cutting blades in the working section using the whetstone, wherein
the given plane is a plane parallel to an XY plane demarcated with the X axis and Y axis.

5. The medical cutting tool manufacturing method of Claim 4, wherein the XY plane is a horizontal plane.

6. The medical cutting tool manufacturing method of Claim 4, wherein the working section is almost a sphere.

7. The medical cutting tool manufacturing method of Claim 4, wherein the cutting blades are formed by moving the medical cutting tool in an arc form in the XY plane.
